# EUROPÄISCHE PATENTANMELDUNG

(11) **EP 1 008 692 A2**
(43) Veröffentlichungstag der Anmeldung: **14.06.2000**
(21) Anmeldenummer: 99122122.7
(22) Anmeldetag: 05.11.1999
(51) Int. Cl.: E01F 8/00

(54) **Transparentes Lärmschutzwandelement**

(30) Priorität: 30.11.1998 DE 29821384 U
(71) Anmelder: Polartherm-Flachglas GmbH, 01558 Grossenhain (DE)
(72) Erfinder: Wittwer, Hans-Georg, 57076 Siegen (DE)
(74) Vertreter: Zieger, Sieglinde, Dipl.-Chem. Petra & Zieger Patentanwälte

(57) **Zusammenfassung**

Die Erfindung betrifft eine Lärmschutzwand aus Verbundsicherheitsglas zum Einsatz auf Bundesfernstraßen und Autobahnen, die die Anwohner vor der erhöhten Lärmbelästigung schützt, gleichzeitig den Lichteinfall nicht einschränkt, im Falle eines Zusammenstosses nicht in viele Einzelteile zerfällt, die wiederum Anwohner oder zufällig vorbeikommende Personen und Fahrzeuge schädigen, und kein Alterungsverhalten im Sinne von vergleichbaren Kunststoffen aufweist.

Erfindungswesentlich ist die Anordnung eines geotextilen Gewebes in einer Verbundsicherheitsglasplatte. Das geotextile Gewebe ist aus Polyester und netzartig und wird mit dem Verbundsicherheitsglas unter Wärmeeinwirkung verpreßt. Das Einfügen des geotextilen Gewebes erhält die Durchsichtigkeit der Verbundsicherheitsglaswand und gibt ihr den Zusammenhalt bei einem Zusammenstoß. Die Verbundsicherheitsglasbruchstücke können nicht einzeln aus dem Verbund herausfallen, sondern bleiben über das Netz des geotextilen Gewebes miteinander verbunden.

Das Einsatzgebiet des transparenten Lärmschutzwandelementes ist besonders geeignet für Lärmschutzwände in bewohnten Gegenden und auf Brücken.

## Beschreibung

Lärmschutzmaßnahmen haben im Laufe der Zeit an Bedeutung nicht ab, sondern eher zugenommen und werden besonders auf Bundesfernstraßen und Autobahnen in Form von Lärmschutzwänden eingesetzt. Im Bereich von Brückenbauwerken sollen Lärmschutzwände die Anwohner vor Lärmbelästigung schützen und gleichzeitig dem Wunsch nach Licht und Wohnqualität Rechnung tragen, so daß an diesen Stellen Lärmschutzwände aus transparenten Materialien, wie z.B. Glas oder Kunststoff, gefordert sind. Die transparenten Materialien, Glas oder Kunststoff, müssen aber auch so angebracht sein, daß die sich bei einem Zusammenstoß mit einem Fahrzeug bildenden Bruchstücke nicht auf die darunterliegende Straße oder eine sonstige belebte Gegend fallen und dort zum Gefahrenrisiko werden. Bisher werden Glas- oder transparente Kunststofflärmschutzwände mit zusätzlich intergrierten Absturzsicherungssystemen, wie Netze oder Halteschlaufen, vor dem Herabstürzen gesichert. Transparente Lärmschutzwände aus Kunststoff, wie Polymethylmethacrylat oder Polycarbonat, zeichnen sich z.B.durch hohe Härte und Festigkeit aus, sind aber beide auch spannungsrißgefährdet und altern, so daß sie in absehbarer Zeit erneuert werden müssen, zusätzlich sind Polymethylmethacrylate brennbar und Polycarbonate aufwendig in der Fertigung. Eine echte Alternative zu Kunststoffen ist daher der Einsatz von Verbundsicherheitsglas. Bei Verbundsicherheitsglas sind die Bruchstücke bei einem Crash klein genug, um vom Schutznetz aufgefangen werden zu können und auch nicht so scharfkantig, daß sie das Schutznetz zerschneiden könnten. Das Schutznetz muß aber dicht an der Verbundsicherheitsglaswand angebracht sein, es ist aber auf jeden Fall zusätzlicher Bearbeitungs- und Montageaufwand notwendig, was die Kosten für Lärmschutzmaßnahmen wesentlich erhöht.

Vor diesem technischen Hintergrund stellt sich die Erfindung die Aufgabe, ein transparentes Lärmschutzwandelement zu entwickeln, bei dem bei einem Zusammenstoß nicht einzelne Bruchstücke herunterfallen und zusätzlich kein Schutznetz montiert werden muß.

Die Aufgabe der Erfindung wird dadurch gelöst, daß in einer Verbundsicherheitsglasplatte eine Schicht geotextiles Gewebe angeordnet ist. Geotextile Gewebe werden bisher zur Befestigung von Abhängen an befahrbaren Wegen und Straßen verwendet. Sie sind aus Polyester und damit unter Wärmeeinwirkung verschmelzbar. Erfindungsgemäß wird das geotextile Gewebe als Maschengewebe, mit einer Maschenweite bis zu 30 mm und einer Stegbreite von max.3 mm, eingesetzt.

Die Erfindung wird an einem Ausführungsbeispiel näher erläutert.
Eine gehärtete Glasplatte in den dafür üblichen Abmessungen und einer Stärke von 10 mm wird mit einer üblichen Polyvinylbutyrylfolie belegt, darauf kommt erfindungsgemäß eine Schicht geotextiles Maschengewebe aus Polyester mit einer Maschenweite von 30 mm und einer Stegbreite von 3 mm. Das geotextile Maschengewebe wird mit einer zweiten Lage Polybutyrylfolie und darauf mit einer zweiten gehärteten Glasplatte gleicher Abmessung und Stärke abgedeckt. Dieser lockere Verbund wird nun in üblicher Weise auf ca. 120°C erwärmt, vorgepreßt und im Autoklaven behandelt. Im Ergebnis wird eine Platte aus Verbundsicherheitsglas erhalten, die den Lärmschutz- und Sicherheitsanforderungen entspricht. Das Lärmschutzwandelement nach der Erfindung schützt die Anwohner vor dem Straßen- und Autobahnlärm und garantiert gleichzeitig, daß beim Zusammenstoß mit einem Fahrzeug keine Bruckstücke, insbesondere von Brücken, auf darunterliegende Straßen, Wege u.ä. fallen. Das transparente Lärmschutzwandelement reißt nur und bleibt insgesamt erhalten. Dadurch wird die zusätzliche Anordnung eines Schutznetzes eliminiert und der Bearbeitungs- und Montageaufwand wird ebenfalls verringert. Auf die Platte aus Verbundsicherheitsglas wird üblicherweise im Anschluß noch ein Vogelschutzgitter gedruckt und so das montagefertige transparente Lärmschutzwandelement erhalten.
Eine vorteilhafte Variante der Erfindung ist der Einsatz von gefärbtem geotextilem Maschengewebe, wobei die Maschenweite und Stegbreite dem Ausführungsbeispiel entsprechen, das geotextile Maschengewebe als Vogelschutzgitter wirkt und das zusätzliche Drucken überflüssig geworden ist.

## Patentansprüche

1. Transparentes Lärmschutzwandelement aus Verbundsicherheitsglas dadurch gekennzeichnet, daß
- in dem Verbundsicherheitsglas eine Schicht geotextiles Maschengewebe angeordnet ist.

2. Transparentes Lärmschutzwandelement nach Anspruch 1 dadurch gekennzeichnet, daß
- das geotextile Maschengewebe aus Polyester ist.

3. Transparentes Lärmschutzwandelement nach Anspruch 1 und 2 dadurch gekennzeichnet, daß
- das geotextile Maschengewebe eingefärbt ist.
